Europäisches Patentamt

European Patent Office

Office européen des brevets

(19)

(11) Numéro de publication: **0 251 840**
**B1**

(12) **FASCICULE DE BREVET EUROPEEN**

(45) Date de publication du fascicule du brevet:
**07.03.90**

(51) Int. Cl.⁴: **B01D 33/00**, C02F 1/28,
**B01J 47/00**

(21) Numéro de dépôt: **87401245.3**

(22) Date de dépôt: **04.06.87**

(54) **Procédé et dispositif individuel de filtration de liquide.**

(30) Priorité: **05.06.86 FR 8608096**

(43) Date de publication de la demande:
**07.01.88 Bulletin 88/1**

(45) Mention de la délivrance du brevet:
**07.03.90 Bulletin 90/10**

(84) Etats contractants désignés:
**BE CH DE GB IT LI NL**

(56) Documents cités:
**DE-C- 176 595**
**FR-A- 519 387**
**FR-A- 2 161 019**
**FR-A- 2 416 042**

(73) Titulaire: **Monnet, Bertrand, 6, Boulevard Chardon
Murs-Erigne, F-49130 Les Ponts-de-Ce(FR)**

(72) Inventeur: **Monnet, Bertrand, 6, Boulevard Chardon
Murs-Erigne, F-49130 Les Ponts-de-Ce(FR)**

(74) Mandataire: **Battut, Michel et al, 220, Avenue de la
Division Leclerc, F-95160 Montmorency(FR)**

ACTORUM AG

## Description

La présente invention concerne un procédé et un dispositif individuel de filtration de liquide, notamment d'eau douce. Ce procédé et ce dispositif ont notamment pour but de rendre potable toute eau douce polluée, quel que soit son degré de pollution.

La potabilisation d'une eau peut se faire soit par voie uniquement mécanique, c'est-à-dire par passage d'eau à travers une unité filtrante, soit par voie mécanique et chimique, c'est-à-dire par une filtration associée à l'action de produits chimiques sur les matières en suspension.

Des dispositifs individuels conçus pour répondre à ces besoins existent mais leurs performances sont limitées. Les premiers sont les appareils équipés de bougies filtrantes. L'unité de filtration est constituée par une ou plusieurs bougies de porcelaine à porosité contrôlée. La filtration s'opère de l'extérieur de la bougie vers l'intérieur. Le colmatage de la bougie est rapide et le débit de filtration est très faible (moins de un à quelques litres à l'heure). D'autres appareils sont équipés de membranes ou de cartouches de filtration. Le principe de fonctionnement de ces appareils repose sur le passage de l'eau à travers une ou plusieurs membranes de microfiltration. Mais ces dispositifs se colmatent facilement et sont inefficaces vis-à-vis des pollutions chimiques et bactériologiques.

Le dispositif selon la présente invention a pour but de remédier à ces inconvénients. Il ne se colmate pas et possède une efficacité accrue sur la pollution chimique et bactériologique.

Le procédé, qui est aussi l'objet de l'invention, est de conception et d'utilisation simple.

Selon l'invention, le procédé de filtration, à l'intérieur d'un récipient tubulaire comportant un filtre fixe et un filtre mobile solidaire d'un organe de manœuvre, est caractérisé par les étapes successives suivantes:

— on rapproche le filtre mobile du filtre fixe, au moyen d'un organe de manœuvre solidaire du filtre mobile, jusqu'à les amener en contact, pour remplir le récipient tubulaire.
— on écarte le filtre mobile pour réaliser une première filtration à travers celui-ci, et
— on rapproche le filtre mobile du filtre fixe pour réaliser une deuxième filtration à travers le filtre fixe.

Selon un mode d'exécution particulier, on effectue pendant la deuxième filtration une opération de décolmatage du filtre mobile par passage, à travers le filtre mobile, d'une partie du liquide filtré une première fois.

Selon un autre mode d'exécution on réalise, pendant la deuxième filtration une solidarisation de l'organe de manœuvre avec un couvercle étanche de façon à créer une chambre au niveau de la zone colmatée.

Le dispositif individuel de filtration selon l'invention est constitué par un récipient tubulaire muni d'un filtre fixe, d'un orifice d'évacuation à une extrémité, d'un orifice de remplissage à l'autre extrémité et d'un couvercle amovible, et est caractérisé en ce que le récipient comporte en outre un filtre mobile solidaire d'un organe de manœuvre, ledit filtre mobile pouvant être traversé par le liquide successivement dans les deux sens au cours de ses déplacements alternatifs sous la commande dudit organe de manœuvre.

Selon un premier mode de réalisation, le récipient comporte un second couvercle mobile, étanche, solidarisable à l'organe de manœuvre, situé à distance du premier couvercle, pour délimiter une chambre.

Selon un deuxième mode de réalisation, les orifices de remplissage et d'évacuation sont obturés par des clapets dont l'ouverture est provoquée par le rapprochement du filtre fixe et du filtre mobile, et dont la fermeture est provoquée par l'écartement des deux filtres.

D'autres caractéristiques et avantages de l'invention apparaîtront dans la description détaillée, non limitative, de deux modes de réalisation de l'invention. Cette description sera faite en regard de dessins annexés dans lesquels:

— la figure 1 représente une coupe longitudinale d'un premier mode de réalisation de l'invention.
— la figure 2 représente les différentes étapes de l'utilisation du premier mode de réalisation de l'invention.
— la figure 3 illustre une coupe longitudinale d'un second mode de réalisation, et
— la figure 4 représente les différentes étapes de l'utilisation de second mode de réalisation.

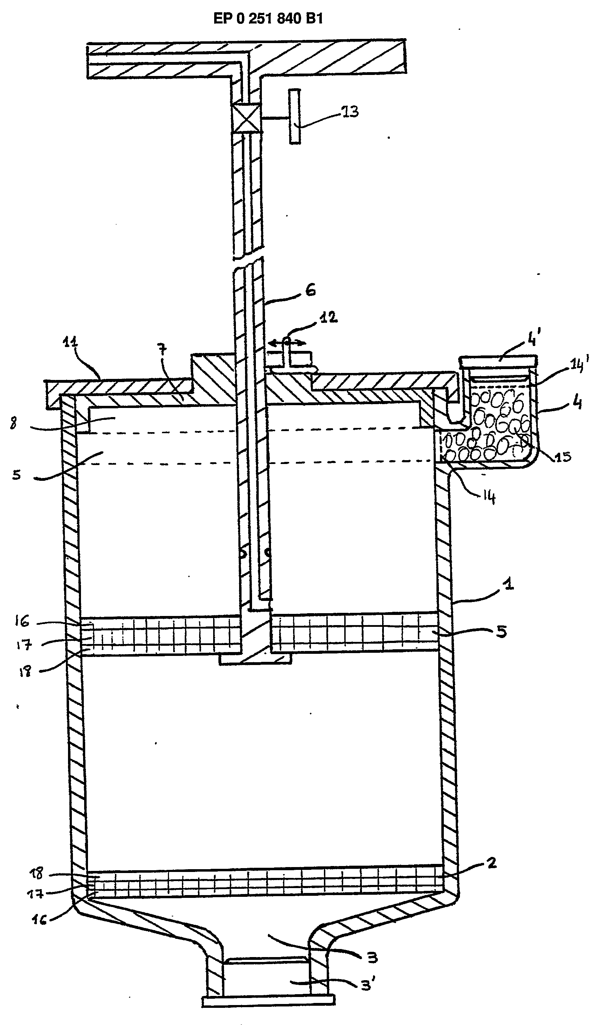

Le dispositif individuel de filtration de l'eau selon l'invention illustré sur la figure 1 se présente sous la forme d'un récipient tubulaire 1. Il comporte à une extrémité un orifice d'évacuation 3 qui peut recevoir un bouchon 3' et à l'autre extrémité, latéralement, un conduit de remplissage 4 qui, lui aussi, peut recevoir un bouchon 4'.

A l'intérieur du récipient tubulaire est placé un filtre fixe 2 situé de préférence immédiatement en amont de l'orifice d'évacuation 3. Un autre élément filtrant 5 est mobile et solidaire d'un organe de manœuvre 6.

Le couvercle 11 comporte deux parties. La partie inférieure 7 peut être rendue solidaire de l'organe de manœuvre 6 par une goupille 12, de façon à délimiter avec le filtre mobile 5, la surface interne et le rebord du couvercle 7, une chambre 8.

L'organe de manœuvre 6, qui est ici représenté sous la forme d'une tige et d'une tige et d'une poignée, est creux. Cette cavité comporte à une extrémité une vanne 13 et débouche à l'autre extrémité en amont du filtre mobile 5 dans la chambre 8.

Les filtres 2 et 5 sont composés de plusieurs couches de matériaux différents. Le filtre 5 est composé dans sa partie supérieure d'une membrane 16, d'une couche intermédiaire de charbon actif 17, et d'une couche inférieure de matière échangeuse d'ions 18. Le filtre 2 est composé d'une couche supérieure de matière échangeuse d'ions 18, d'une couche intermédiaire de charbon actif 17 et d'une couche inférieure constituée par une membrane 16 dont le seuil de filtration est inférieur au seuil de filtration de la membrane du filtre mobile. Cependant, la disposition des couches 17 et 18 peut être inversée. Le conduit de remplissage 4 comporte à ses extrémités deux tamis perméables 14 et 14' entre lesquels sont placés un désinfectant et un floculant 15 qui ont pour fonction, lors du remplissage du recipient, de créer le coagulation et le floculation des colloides et des colloides et des matières en suspension dans l'eau, et d'assurer une désinfection en même temps qu'une oxydation des matières organiques. L'eau brute introduite dissout une quantité suffisante de substance et l'entraîne à l'intérieur du récipient où elle agit.

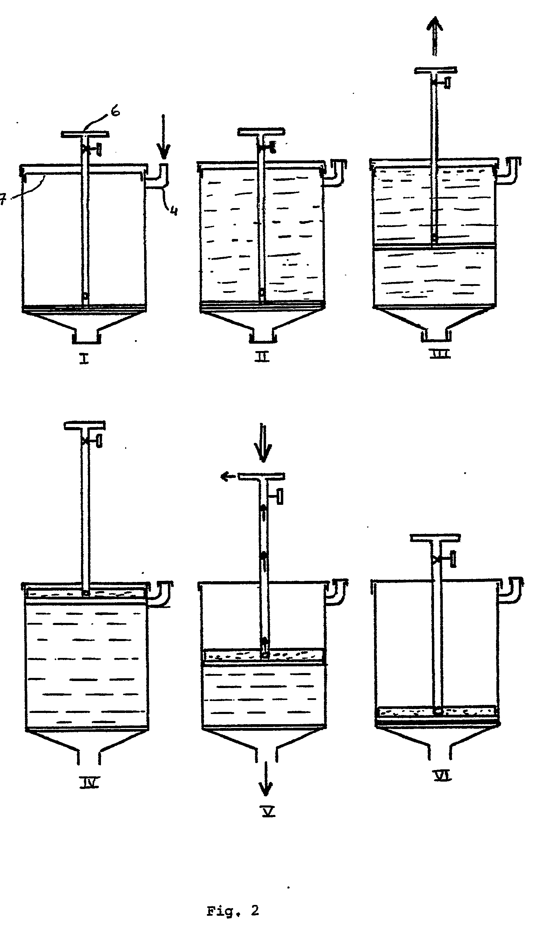

La figure 2 illustre, très schématiquement, les différentes étapes d'une utilisation du dispositif décrit plus haut.

Pour effectuer la filtration de l'eau, on opère comme suit: le conduit de remplissage 4 étant ouvert, on remplit le récipient 1 alors que le filtre mobile 5 est en position basse (étape I), puis on referme le conduit 4 (étape II). On peut laisser reposer quelques minutes pour que les substances placées dans le conduit 4 puissent agir, puis éventuellement, on secoue. A partir de cette position adjacente des deux filtres, on remonte le filtre mobile pour réaliser une première filtration à travers celui-ci (étape III). Pendant cette filtration, les matières en suspension sont retenues à la surface supérieure de la membrane du filtre mobile.

On solidarise alors le couvercle mobile 7 à l'organe de manœuvre 6 à l'aide des moyens de liaison 12 (étape IV) pour créer une chambre de volume fixe 8.

La vanne 13 étant fermée, après avoir enlevé le bouchon de l'orifice d'évacuation 3, on rapproche de filtre mobile du filtre fixe pour réaliser une deuxième filtration à travers le filtre fixe et on récupère alors une eau potable (étapes V et VI).

Les matières en suspension qui sont passées au travers du filtre mobile de la première phase sont retenues par le filtre fixe dont la membrane présente un seuil de filtration légèrement inférieur à celui de la membrane du filtre mobile.

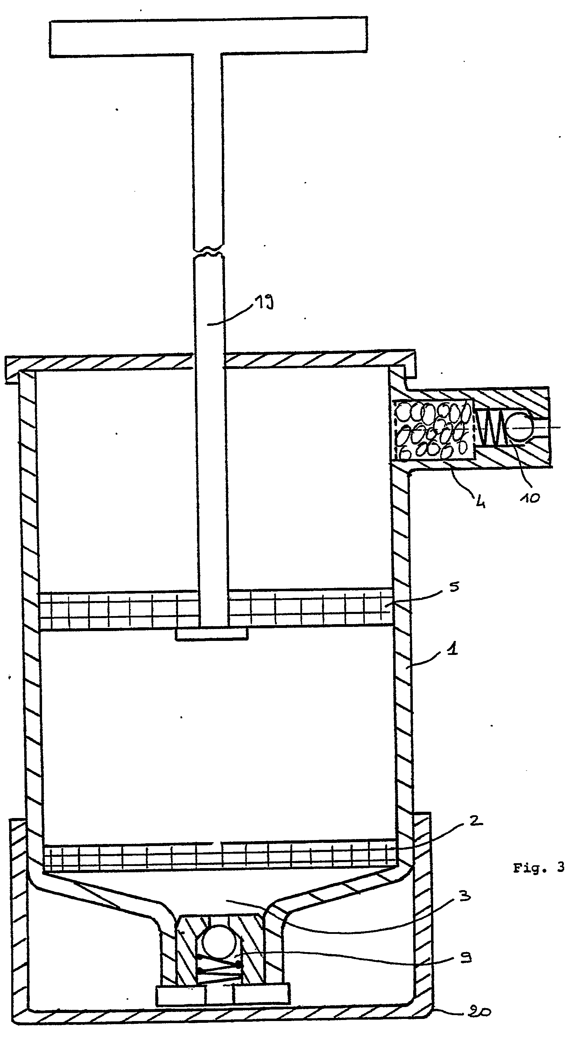

En référence à la figure 3, qui illustre une coupe longitudinale d'un second mode de réalisation de l'invention, le récipient 1 est muni d'un orifice d'évacuation 3, d'un conduit de remplissage 4 et d'un filtre fixe 2 du même type que dans la première réalisation. Le filtre mobile 5 est solidaire d'un organe de manœuvre plein 19, par exemple une tige munie d'une poignée. Le récipient comporte de plus un premier clapet 9 qui obture l'orifice 3 et un second clapet 10 à la base du conduit 4. Ces clapets s'ouvrent lorsqu'on rapproche le filtre mobile obture l'orifice 3 et un second clapet 10 à la base du conduit 4. Ces clapets s'ouvrent lorsqu'on rapproche le filtre mobile du filtre. Le dispositif comporte de plus un étui de protection 20 adaptable sur la partie basse du récipient 1.

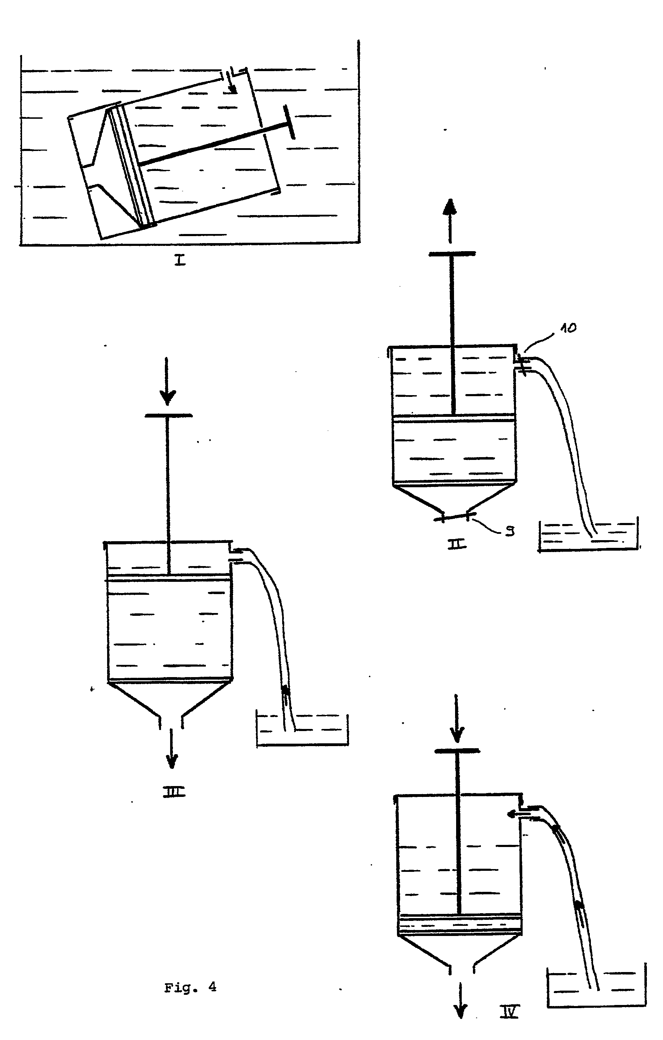

La figure 4 illustre les différentes étapes d'une utilisation du second mode de réalisation de l'invention.

La filtration s'effectue alors selon les étapes suivantes: on plonge le dispositif dans l'eau brute et on rapproche le filtre mobile 5 du filtre fixe 2. Les clapets 9 et 10 s'ouvrent au cours de ce déplacement.

Le conduit de remplissage étant ouvert, l'eau rentre à l'intérieur du récipient (étape I). Lorsque les filtres mobile et fixe sont dans une position adjacente, on remonte le filtre mobile pour réaliser une première filtration à travers celui-ci: les clapets sont alors dans une position fermée (étape II). On ouvre l'orifice d'évacuation 3 et on rapproche le filtre mobile du filtre fixe pour réaliser une deuxième filtration à travers le filtre fixe. Les clapets sont alors de nouveau ouverts, l'eau filtrée est alors évacuée (étape III). L'étui 20 permet, lorsqu'il est emboîté, de ne pas souiller la partie basse du récipient lorsqu'on plonge celui-ci dans l'eau brute. Lorsqu'il est détaché du récipient, il peut alors servir de réserve d'eau.

En reliant le conduit de remplissage à un tuyau plongé dans la source d'eau, ou en remplissant l'appareil avec l'étui 20, on peut alors effectuer une filtration en continu. En effet, lors de la deuxième filtration, l'eau filtrée est évacuée alors que de l'eau brute est aspirée et remplit le récipient au-dessus du filtre mobile. On répète alors l'opération plusieurs fois et on réalise une filtration en continu (étape IV).

Pendant la deuxième filtration, une opération de décolmatage du filtre mobile est effectuée par le passage au travers du filtre mobile d'une partie de l'eau filtrée une première fois.

Il sera utile, après quelques utilisations, une dizaine par exemple, de démonter le dispositif pour rincer tous les éléments, et en particulier, le filtre mobile.

## Revendications

1. Procédé de filtration de liquide, notamment d'eau douce polluée, contenu dans un récipient tubulaire (1) comportant un filtre fixe (2) et un filtre mobile (5) solidaire d'un organe de manœuvre, caractérisé en ce que successivement:
   - on rapproche le filtre mobile du filtre fixe, au moyen d'un organe de manœuvre solidaire du filtre mobile, jusqu'à les amener en contact, pour remplir le récipient tubulaire;
   - on écarte le filtre mobile du filtre fixe, à partir de la position adjacente des deux filtres, pour réaliser une première filtration à travers le filtre mobile;
   - on rapproche le filtre mobile du filtre fixe, pour réaliser une seconde filtration à travers le filtre fixe.

2. Procédé de filtration selon la revendication 1, caractérisé en ce que, pendant la deuxième filtration, on réalise une opération de décolmatage du filtre mobile (5) par le passage, à travers ce dernier, d'une partie du liquide filtré une première fois.

3. Dispositif individuel de filtration de liquide, notamment d'eau douce, du type constitué par un récipient tubulaire (1) muni d'un filtre fixe (2), d'un orifice d'évacuation (3) à une extrémité, d'un orifice de remplissage (4) à l'autre extrémité et d'un couvercle amovible (11), caractérisé en ce que le récipient comporte en outre un filtre mobile (5) solidaire d'un organe de manœuvre (6), ledit filtre mobile (5) pouvant être traversé par le liquide successivement dans les deux sens, au cours de ses déplacements alternatifs sous la commande dudit organe de manœuvre (6).

4. Dispositif individuel de filtration selon la revendication 3, caractérisé en ce que les orifices de remplissage et d'évacuation sont obturés par des clapets (9) et (10) dont l'ouverture est provoquée par le rapprochement du filtre fixe (2) et du filtre mobile (5) et dont la fermeture est provoquée par l'écartement des deux filtres.

5. Dispositif individuel de filtration selon la revendication 3, caractérisé en ce que le récipient tubulaire (1) comporte un second couvercle (7) intérieur au corps du récipient tubulaire (1) dont il épouse le contour de façon étanche, ledit couvercle (7) pouvant être rendu mobile par solidarisation à l'organe de manœuvre (6) en ménageant une chambre (8) entre le filtre mobile (5) et le fond dudit second couvercle (7).

6. Dispositif individuel de filtration selon la revendication 5, caractérisé en ce que l'organe de manœuvre (6) est une tige pourvue d'un canal dont l'une des extrémités débouche dans le volume compris entre le filtre mobile (5) et le fond du couvercle mobile (7) du récipient tubulaire (1) et dont l'autre extrémité débouche dans l'atmosphère sous la commande d'une vanne (13).

7. Dispositif de filtration selon l'une des revendications 3 à 6, caractérisé en ce que l'orifice de remplissage est relié à un conduit comportant à ses deux extrémités des tamis perméables (14) et (14') entre lesquels sont placés un désinfectant et un floculant (15).

8. Dispositif de filtration selon l'une des revendications 3 à 7 caractérisé en ce que le filtre mobile (5) comporte une couche de charbon actif, une couche de matière échangeuse d'ions et une membrane, cette dernière constituant la face du filtre mobile située en regard du couvercle (11).

9. Dispositif de filtration selon l'une des revendications 3 à 7, caractérisé en ce que le filtre fixe (2) comporte une couche de charbon actif, une couche de matière échangeuse d'ions et une membrane, cette dernière constituant la face du filtre fixe située en regard de l'orifice d'évacuation (3).

10. Dispositif de filtration selon l'une des revendications 3 à 9, caractérisé en ce qu'il comporte, en outre, un étui amovible (20) adaptable sur le récipient (1) de façon à coiffer l'orifice d'évacuation (3).

11. Dispositif selon les revendications 8 et 9, caractérisé en ce que le seuil de filtration de la membrane (16) du filtre fixe (2) est inférieur à celui de la membrane (16) du filtre mobile (5).

## Patentansprüche

1. Verfahren zum Filtern von Flüssigkeit, insbesondere verschmutztem Süßwasser, das in einem rohrförmigen Behälter (1) mit einem festen Filter (2) und einem bewegbaren Filter (5) enthalten ist, der mit einem Betätigungsorgan verbunden ist, dadurch gekennzeichnet, daß aufeinanderfolgend:
   – der bewegbare Filter dem festen Filter mittels eines Betätigungsorgans angenähert wird, das mit dem beweglichen Filter verbunden ist, bis zu deren In-Kontakt-Bringen, um den rohrförmigen Behälter zu füllen;
   – der bewegbare Filter vom festen Filter entfernt wird, ausgehend von der benachbarten Stellung der beiden Filter, um eine erste Filtration durch den bewegbaren Filter zu erzeugen;
   – der bewegbare Filter dem festen Filter angenähert wird, um eine zweite Filtration durch den festen Filter zu erzeugen.

2. Filtrierverfahren nach Anspruch 1, dadurch gekennzeichnet, daß während der zweiten Filtration ein Reinigungsvorgang des bewegbaren Filters (5) durch das Hindurchtreten durch den letzteren eines Teils der einmal gereinigten Flüssigkeit erzeugt wird.

3. Einzelvorrichtung zum Filtern von Flüssigkeit insbesondere Süßwasser, vom Typ gebildet aus einem rohrförmigen Behälter (1), der mit einem festen Filter (2) versehen ist, einer Ausbringöffnung (3) an einem Ende, einer Füllöffnung (4) am anderen Ende und einem bewegbaren Deckel (11), dadurch gekennzeichnet, daß der Behälter weiterhin einen bewegbaren Filter (5) aufweist, der mit einem Betätigungsorgan (6) verbunden ist, wobei der bewegbare Filter (5) von der Flüssigkeit in beide Richtungen aufeinanderfolgend durchquert werden kann, während der hin- und hergehenden Bwegungen unter Betätigung des Betätigungsorgans (6).

4. Einzelfiltriervorrichtung nach Anspruch 3, dadurch gekennzeichnet, daß die Füll- und Ausbringöffnung durch Klappen (9) und (10) abgedeckt sind, deren Öffnung durch das Annähern des festen Filters (2) und des bewegbaren Filters (5) hervorgerufen wird, und deren Schließen durch das Beabstanden der beiden Filter hervorgerufen wird.

5. Einzelfiltriervorrichtung nach Anspruch 3, dadurch gekennzeichnet, daß der rohrförmige Behälter (1) einen zweiten Deckel (7) im Inneren des Körpers des rohrförmigen Behälters (1) aufweist, deren Kontur er auf dichtende Weise folgt, wobei der Deckel (7) durch Verbindung mit dem Betätigungsorgan (6) bewegbar gemacht wird unter Ausbildung einer Kammer (8) zwischen dem bewegbaren Filter (5) und dem Boden des genannten zweiten Deckels (7).

6. Einzelfiltriervorrichtung nach Anspruch 5, dadurch gekennzeichnet, daß das Betätigungsorgan (6) eine Stange ist, die mit einem Kanal versehen ist, dessen eines Ende in das Volumen mündet, das zwischen dem bewegbaren Filter (5) und dem Boden des bewegbaren Deckels (7) des rohrförmigen Behälters (1) vorhanden ist, und dessen anderes Ende in die Umgebung mündet unter der Betätigung eines Ventils (13).

7. Filtriervorrichtung nach einem der Ansprüche 3 bis 6, dadurch gekennzeichnet, daß die Füllöffnung mit einer Leitung verbunden ist, die an ihren beiden Enden durchlässige Siebe (14) und (14') aufweist, zwischen denen ein Desinfektions- und ein Flockungsmittel (15) gesetzt sind.

8. Filtriervorrichtung nach einem der Ansprüche 3 bis 7, dadurch gekennzeichnet, daß der bewegbare Filter (5) eine Schicht von Aktivkohle, eine Schicht Ionenaustauscher und eine Membran aufweist, wobei letztere die Seite des bewegbaren Filters bildet, die dem Deckel (11) gegenüberliegt.

9. Filtriervorrichtung nach einem der Ansprüche 3 bis 7, dadurch gekennzeichnet, daß der feste Filter (2) eine Schicht Aktivkohle, eine Schicht Ionenaustauscher und eine Membran aufweist, wobei letztere die Seite des festen Filters bildet, die der Ausbringöffnung (3) gegenüberliegt.

10. Filtriervorrichtung nach einem der Ansprüche 3 bis 9, dadurch gekennzeichnet, daß sie weiterhin eine bewegbare Tasche (20) aufweist, die auf den Behälter (1) derart aufbringbar ist, daß sie die Ausbringöffnung (3) überdeckt.

11. Vorrichtung nach den Ansprüchen 8 und 9, dadurch gekennzeichnet, daß die Filtrationsschwelle der Membran (16) des festen Filters (2) geringer ist als jene der Membran (16) des bewegbaren Filters (5).

## Claims

1. A process for the filtration of a liquid, namely polluted soft water, inside a tubular container (1) comprising a fixed filter (2) and a movable filter (5) connected to a driving member, characterized in that successively:
   – the mobable filter is brought closer to the fixed filter, by means of a driving member connected to the movable filter, until they come into contact, in order to fill the tubular container;
   – the movable filter (5) is separated from the fixed filter, starting from the adjacent position of the two filters, in order to carry out a first filtration through the movable filter;
   – the movable filter is brought closer to the fixed filter, in order to carry out a second filtration through the fixed filter.

2. The filtration process in accordance with claim 1, characterized in that during the second filtration, a declogging operation of the movable filter (5) is carried out by passing therethrough a part of the liquid filtered for the first time.

3. An individual apparatus for the filtration of a liquid, in particular soft water, of the type comprising a tubular container (1) provided wtih a fixed filter (2), an outlet opening (3) at one end, a filling opening (4) at the other end and a removable cover (11), characterized in that the container further comprises a movable filter (5) connected to a driving member (6), said movable filter (5) being passed through by the liquid successively in opposite directions during its alternated movements under the control of said driving member (6).

4. The individual filtration apparatus in accordance with claim 3, characterized in that the filling and outlet openings are blanked off by valves (9 & 10), the opening of which is caused by the bringing closer of the fixed filter (2) and the movable filter (5) and the closing of which is caused by the separation of the two filters.

5. The individual filtration apparatus in accordance with claim 3, characterized in that the tubular container (1) includes a second cover (7) inside the body of the tubular container (1), the contour of which it follows sealingly, and said cover (7) can be made movable by connecting it to the driving member (6) so that a chamber (8) is provided between the movable filter (5) and the bottom of the said second cover (7).

6. The individual filtration apparatus in accordance with claim 5, characterized in that the driving member (6) is a stem having a channel inside, one end of which exits into the volume comprised between the movable filter (5) and the base of movable cover (7) of the tubular container (1) and the other end of which exits into the atmosphere under the control of a valve (13).

7. The individual filtration apparatus in accordance with any one of claims 3 to 6, characterized in that the filling opening is connected to a pipe having at its two ends permeable sieves (14 & 14'), between which are placed a disinfectant and a flocculating agent (15).

8. The filtration apparatus in accordance with any one of claims 3 to 7, characterized in that the movable filter (5) comprises a layer of active carbon, a layer of ion-exchange material and a membrane, the latter constituting the face of the movable filter located in front of the cover (11).

9. The filtration apparatus in accordance with any one of claims 3 to 7, characterized in that the fixed filter (2) comprises a layer of active carbone, a layer of ion-exchange material and a membrane, the latter constituting the face of the fixed filter located in front of the outlet opening (3).

10. The filtration apparatus in accordance with any one of claims 3 to 9, characterized in that it further comprises a removable casing (20) which can be adapted onto said container (1) in order to cover the said outlet opening (3).

11. The filtration apparatus in accordance with claims 8 and 9, characterized in that the filtration threshold of membrane (16) of the fixed filter (2) is lower than that of membrane (16) of the movable filter (5).

Fig.1

Fig. 2

Fig. 3

Fig. 4